# EUROPEAN PATENT APPLICATION

(11) **EP 0 921 485 A2**
(43) Date of publication of application: **09.06.1999**
(21) Application number: 98308882.4
(22) Date of filing: 29.10.1998
(51) Int. Cl.: G06F 17/60

(54) **A centralized billing service for a computer network**

(30) Priority: 28.11.1997 GB 9725191
(71) Applicant: International Business Machines Corporation, Armonk, N.Y. 10504 (US)
(72) Inventor: Carter, John Mervyn, Southampton, Hampshire S016 7LL (GB)
(74) Representative: Moss, Robert Douglas

(57) **Abstract**

A centralized electronic billing apparatus to which at least one supplier and at least one consumer connects to in a computer network, to thus enable electronic commerce to be carried out between the suppliers and consumers, has a means for accepting from an identified supplier usage charging terms concerning how prices are to be associated with amounts of consumption of a good or service by consumers; a means for accepting from the identified supplier a consumer usage amount indicating an amount of consumption of a good or service by an identified consumer; and a means for preparing a total price amount which the identified consumer owes the identified supplier by correlating the usage charging terms with the consumer usage amount, and for preparing a bill reflecting the total price amount.

## Description

### Field of the Invention

The present invention relates to computer-based on-line commerce, where a computer user buys goods or services through his computer by linking his computer with that of a plurality of sellers through a computer network.

### Background of the Invention

As networks of linked computers become an increasingly more prevalent concept in everyday life, so-called "on-line" interactions between computer users has begun to spread into many different areas of our lives. One of these areas is the marketplace for goods and services.

In the past couple of years there has been an explosive growth in the use of the globally-linked network of computers known as the Internet, and in particular of the worldwide Web (WWW), which is one of the facilities provided on top of the Internet. The WWW comprises many pages or files of information, distributed across many different server computer systems. Information stored on such pages can be, for example, details of a company's organization, contact data, product data and company news. This information can be presented to the user's computer system ("client computer system") using a combination of text, graphics, audio data and video data. Each page is identified by a Universal Resource Locator (URL). The URL denotes both the server machine, and the particular file or page on that machine. There may be many pages or URLs resident on a single server.

In order to use the WWW, a client computer system runs a piece of software known as a graphical Web browser, such as WebExplorer (provided as part of the OS/2 operating system from IBM Corporation), or the Navigator program available from Netscape Communications Corporation. "WebExplorer", "OS/2" and "IBM" are trademarks of the International Business Machines Corporation, while "Navigator" and "Netscape" are trademarks of the Netscape Communications Corporation. The client computer system interacts with the browser to select a particular URL, which in turn causes the browser to send a request for that URL or page to the server identified in the URL. Typically the server responds to the request by retrieving the requested page, and transmitting the data for that page back to the requesting client computer system (the client/server interaction is performed in accordance with the hypertext transport protocol ("HTTP")). This page is then displayed to the user on the client screen. The client may also cause the server to launch an application, for example to search for WWW pages relating to particular topics.

Most WWW pages are formatted in accordance with a computer program written in a language known as HTML (hypertext mark-up language). This program contains the data to be displayed via the client's graphical browser as well as formatting commands which tell the browser how to display the data. Thus a typical Web page includes text together with embedded formatting commands, referred to as tags, which can be used to control the font size, the font style (for example, whether italic or bold), how to lay-out the text, and so on. A Web browser "parses" the HTML script in order to display the text in accordance with the specified format. HTML tags are also used to indicate how graphics, audio and video are manifested to the user via the client's browser.

Most Web pages also contain one or more references to other Web pages, which need not be on the same server as the original page. Such references may generally be activated by the user selecting particular locations on the screen, typically by clicking a mouse control button. These references or locations are known as hyperlinks, and are typically flagged by the browser in a particular manner (for example, any text associated with a hyperlink may be in a different colour). If a user selects the hyperlink, then the referenced page is retrieved and replaces the currently displayed page.

Further information about HTML and the WWW can be found in "World wide Web and HTML" by Douglas McArthur, p18-26 in Dr Dobbs Journal, December 1994, and in "The HTML SourceBook" by Ian Graham, (John Wiley, New York, 1995).

Enterprises (companies) are considering their usage of the world wide Web. The first phase, namely the publicity of the company in whatever form, has already occurred. Home pages are commonplace, an essential ingredient for any company which wishes to maintain itself in line with current business practices. The publicity material contains marketing information, product brands and, in some cases, product catalogues.

The second phase, namely to conduct commerce, is emerging. Enterprises are poised to conduct business by way of the world wide Web. They are seeking to make sales of their products and services, by way of the world wide Web.

Software infrastructure is coming into existence to enable the progress of this trend. Secure financial protocols have been defined and are being implemented. The provision of firewall technologies offer safeguards to the enterprise, without which the enterprise would not contemplate permitting access to its critical data. Gateway products are becoming available to facilitate connection between the world wide Web and the server machines of the enterprise.

Thus, many suppliers have begun to sell their goods and services over the world wide Web by placing their catalogs on their Web pages, such catalogues listing content-related information (e.g. product description, price, availability) about the various goods and services offered for sale.

One of the challenges faced by an on-line merchant is that its on-line customers must be billed in such a way that is inexpensive. That is, the cost a merchant encounters in order to collect the money that he is due from his purchasers needs to be minimized. To meet this challenge, one trend has been to offload or outsource the entire billing function to a separate third part Web-based billing service. This way, the merchant does not have to worry about billing or collection. See, for example, WO 97/40615 published 30 October 1997 and assigned to AT & T Corporation.

While the heretofore known prior art technique mentioned above which outsources the billing function serves to greatly reduce the cost of collection for a merchant, the merchant is still faced with the task of associating a price (in currency) with each customer transaction, adding up such prices per customer and reporting the total to the billing service. This causes a particular problem in the area of "usage" or "metered" billing, as is done by a utility company, such as the gas company, where customers are charged on a "per unit" basis. In such a case, the merchant has to add up the number of units for a particular customer and then use charging rate tables, which could vary depending on the type of customer, to convert the number of units into currency for reporting to the billing service. This results in the merchant's cost of collection being quite high.

In the world wide Web environment, software applications will be "rentable" as well as "purchasable". For example, individual users will prepare their letters/documents and financial plans by usage of a word processor and/or a spread sheet. Similarly information and service providers will charge on a "usage" basis, for example, number of accesses, quantity of data, duration of connect time, etc.

Such "metered" or "usage" billing accumulates usage for subsequent billing. The cost of usage (being very small) is represented by a "token" (of consumption), the "unit". Sometimes, the "integration" of consumed units, leads to variations in the charge per unit. For example, industrial consumers of electricity get different rates of charge per unit, or, the first so many units are charged at the first rate and the second so many units are charged at another rate and so on.

The service provider will need to achieve an appropriate "return on investment" and therefore must charge for the usage of the service. However, to be commercially viable the cost for the service must be commensurate to its value as perceived by the consumer. If the service is of a nature which necessitates a small charge per usage, then the cost of collection becomes an economic inhibitor to the commercial provision of that service, that is the "cost of collection" must be a small percentage of the "value to be collected".

Unless this inhibitor can be overcome, the business viability and growth of thousands (or millions) of small businesses or small aspects of large businesses is limited in the deployment of the service providing software on the world wide Web.

### Summary of the Invention

According to one aspect, the invention provides a centralized electronic billing apparatus to which at least one supplier and at least one consumer connects in a computer network, to thus enable electronic commerce to be carried out therebetween, the apparatus comprising: means for accepting from an identified supplier usage charging terms concerning how prices are to be associated with amounts of consumption of a good or service by consumers; means for accepting from said identified supplier a consumer usage amount indicating an amount of consumption of a good or service by an identified consumer; and means for preparing a total price amount which said identified consumer owes said identified supplier by correlating said usage charging terms with said consumer usage amount, and for preparing a bill reflecting said total price amount.

Preferably, the apparatus also has a means for accepting from said identified supplier a one-time charge indicating an amount of money that should be charged to said identified consumer; and means for consolidating said one-time charge with said total price amount to be reflected in said bill.

Further preferably, said charging terms include prices applicable for various categories of a particular good or service.

According to a second aspect, the invention provides a method of performing centralized electronic billing where at least one supplier and at least one consumer connects in a computer network to a central billing apparatus, to thus enable electronic commerce to be carried out therebetween, the method, carried out by the billing apparatus, comprising steps of: accepting from an identified supplier usage charging terms concerning how prices are to be associated with amounts of consumption of a good or service by consumers; accepting from said identified supplier a consumer usage amount indicating an amount of consumption of a good or service by an identified consumer; preparing a total price amount which said identified consumer owes said identified supplier by correlating said usage charging terms with said consumer usage amount; and preparing a bill reflecting said total price amount.

According to a third aspect, the invention provides a method of instructing the carrying out of centralized electronic billing where at least one supplier and at least one consumer connects in a computer network to a central billing apparatus, to thus enable electronic commerce to be carried out therebetween, the method, carried out by a supplier, comprising steps of: providing usage charging terms concerning how prices are to be associated with amounts of consumption of a good or service by consumers; and providing a consumer usage amount indicating an amount of consumption of a good or service by an identified consumer; so that the central billing apparatus can prepare a total price amount which said identified consumer owes said supplier by correlating said usage charging terms with said consumer usage amount.

According to a fourth aspect, the invention provides a computer program product, stored on a computer-readable storage medium, for, when run on a computer, instructing the computer to carry out a method of performing centralized electronic billing where at least one supplier and at least one consumer connects in a computer network to a central billing apparatus, to thus enable electronic commerce to be carried out therebetween, the method, carried out by the billing apparatus, comprising steps of: accepting from an identified supplier usage charging terms concerning how prices are to be associated with amounts of consumption of a good or service by consumers; accepting from said identified supplier a consumer usage amount indicating an amount of consumption of a good or service by an identified consumer; preparing a total price amount which said identified consumer owes said identified supplier by correlating said usage charging terms with said consumer usage amount; and preparing a bill reflecting said total price amount.

Because the merchant (supplier) has outsourced the metered billing function to the central billing service, all the merchant need do with respect to billing is collect the number of units consumed by each consumer and report this total to the billing service. The merchant need not reference charging rate tables in order to convert the number of units into currency, this function is off-loaded to the billing service. This greatly reduces the merchant's cost of collection.

### Brief Description of the Drawings

A preferred embodiment of the invention will be described in detail below with reference to the following figures:
Figure 1 is a block diagram illustrating a computer network environment in which the preferred embodiment of the present invention exists; and
Figure 2 is a flowchart showing the steps carried out by the billing service according to a preferred embodiment of the present invention.

### Detailed Description of the Preferred Embodiment

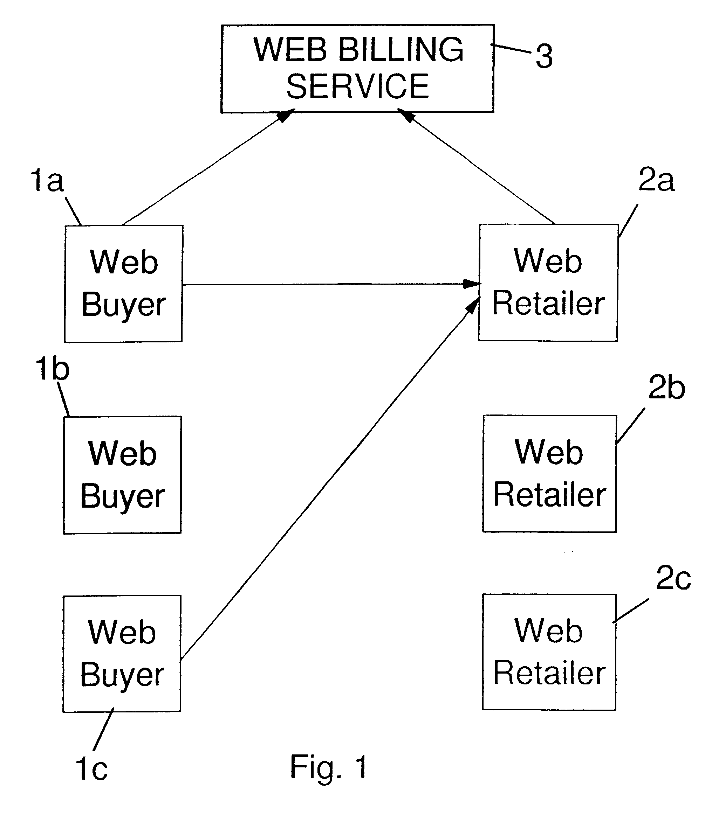

In Fig. 1, a plurality of Web-based buyers 1a, 1b, 1c, are connected to the Internet so as to enable electronic commerce between them and a plurality of Web-retailers 2a, 2b, 2c. The Web-retailers could be sellers of goods or services. A Web-based billing service 3 is provided to handle the billing function referred to below as a "Billing Service".

In the following description of the communication which takes place between Web-buyers, Web-retailers and the Billing Service, tokens, which are passed back and forth, represent the supplier and consumer and are assumed to be secure; that is, the security of the representative values is not a subject of discussion herein.

The "Billing Service" includes the provision of the following functions (the name of the function is listed and then the items of information which the Billing Service ACCEPTS are listed, as are the items of information that the Billing Service RETURNS):

| | | |
|---|---|---|
| a. REGISTER_SUPPLIER | ACCEPTS | Supplier_details |
| | RETURNS | Supplier_token |

The purpose of this function is to identify the supplier (e.g., merchant) and to establish a token which represents that supplier to the Billing Service. Note that it is possible for a supplier to have more than one relationship with the Billing Service, i.e. multiple supplier_token's, but that the Billing Service would treat this multiplicity as autonomous instances of the supplier.

The supplier_details contain as much information as is appropriate, such as the name, address and telephone numbers of the supplier, and perhaps any group affiliations which could act as further identification.

| | | |
|---|---|---|
| b. REGISTER_CONSUMER | ACCEPTS | Consumer_details |
| | RETURNS | Consumer_token |

The purpose of this function is to identify the consumer and to establish a token which represents that consumer to the Billing Service. Note that it is possible for a consumer to have more than one relationship with the Billing Service, i.e. multiple consumer_token's, but that the Billing Service would treat this multiplicity as autonomous instances of the consumer.

This function can be used by either a supplier or a consumer. That is, either the supplier or consumer can present the consumer's details to the Billing Service. If the supplier does this, the consumer would have had to have first given the information to the supplier. In this way a consumer can apply to the Billing Service for a consumer_token which can be offered to the supplier (this is the equivalent of obtaining a credit card number for use across a multiplicity of suppliers) as opposed to a supplier registering a consumer automatically as part of its procedure to establish its relationship with the consumer.

The intention is to attempt to identify the consumer not only within the context of a particular supplier, but across as many suppliers (serviced by the "Billing Service") as is possible. The union of the "supplier_token" and the "consumer_token" will be unique within a particular "Billing Service", but the "supplier_token" will be common to many consumers and the "consumer_token" will be common to many suppliers.

The consumer_details contain as much information as is appropriate, such as the name, address and telephone numbers of the consumer and any other germane information which can be used as further identification of the consumer. In order to maximise the possibility of identifying the consumer across many suppliers, the "consumer_details" is permitted to contain reference information to other suppliers (compare/contrast a store account application form which might well inquire if the consumer has accounts in other stores, or a credit card application form which indicates that referral to some Credit Reference Agency will occur).

| | | |
|---|---|---|
| c. VALIDATE_CONSUMER | ACCEPTS | Consumer_details |
| | | Consumer_token |
| | RETURNS | VALID/INVALID |

The purpose of this function is to validate the consumer_details against the consumer_token. This would be used by a supplier in the situation when a consumer offers a consumer_token as part of the procedure for establishing a relationship with the supplier.

| | | |
|---|---|---|
| d. VALIDATE_SUPPLIER | ACCEPTS | Supplier_details |
| | | Supplier_token |
| | RETURNS | VALID/INVALID |

The purpose of this function is to validate the supplier_details against the supplier_token.

| | | |
|---|---|---|
| e. ESTABLISH_USAGE_CHARGES | ACCEPTS | Supplier_token |
| | | Usage_charge_details |
| | | Consumer_token_list |

The purpose of this function is to inform the Billing Service of the usage charging terms and conditions of that supplier for the identified consumers.

The usage_charge_details will include information regarding the category of a unit, start and end dates, charging bands, and charges within each band.

The consumer_token_list identifies the consumer (or consumers) to whom these usage_charges pertain.

| | | |
|---|---|---|
| f. ESTABLISH_BILLING_DATE | ACCEPTS | Supplier_token |
| | | Billing_period_details |
| | | Consumer_token_list |

The purpose of this function is to inform the Billing Service of the frequency for billing the identified consumers (weekly, monthly, etc.) as well as the timing (e.g., on the 12th day of the month). There is an assumption in this that the Billing Service has only a limited number of options with respect to the frequency of the despatch of bills, so that the Billing Service is able to optimise the benefit of "integration".

The billing_period_details selects one of a number of options (monthly, quarterly, yearly, etc.) offered by the Billing Service for a particular category of unit or one time charge.

| | | |
|---|---|---|
| g. PROVIDE_CONSUMER_USAGE | ACCEPTS | Supplier_token |
| | | Consumer_token |
| | | Consumption_details |
| | | Supplier_reference_token |

The purpose of this function is to inform the Billing Service of the usage by an identified consumer.

The consumption_details specify the number and description of the units of a particular type consumed by the identified consumer and the dates of that consumption.

The supplier_reference_token is a value relevant to the supplier. This value will be returned as part of the information to the supplier, when the Billing Service makes a payment to the supplier.

Note that the payment of a supplier by the Billing Service is not discussed herein, it may or may not be an electronic mechanism. However the assumption is that any payment from the Billing Service to a supplier will include correlated lists of customer_token's and supplier_reference_token's, so that the supplier can reconcile, in the supplier's accounting system, this payment from the Billing Service against charges raised by the supplier.

| | | |
|---|---|---|
| h. PROVIDE_ONETIME_CHARGE | ACCEPTS | Supplier_token |
| | | Consumer_token |
| | | Consumption_details |
| | | Supplier_reference_token |

The purpose of this function is to inform the Billing Service of a one time charge incurred by an identified consumer.

The consumption_details will specify the cost and description of the one time charge incurred by the identified consumer and the date of that charge.

The foregoing describes the interchanges between the supplier and consumer on the one hand and the Billing Service on the other hand to achieve the billing. The above functional definitions are not a programming interface, but the framework of the protocol between the consumer/supplier and the Billing Service. It is preferred that the requests and responses are carried on some guaranteed (once and only once) delivery communication (messaging) system (such as IBM's MQSeries™) and that it is this mechanism which identifies, amongst other things, the addresses for the requests and responses.

As an example of the operation of the above described Billing Service 3, assume that Web retailer 2a in Fig. 1 is a supplier of paper and Web buyer 1a is an artist who needs paper of various colours for his artwork. It is assumed here that different colours of paper will cost different amounts of money. On one day the artist web buyer 1a makes an electronic request over the Internet to the Web paper seller 2a for three sheets of orange paper. The Web retailer 2a receives the request, mails out the three sheets of orange paper to the artist 1a and keeps track of the fact that artist 1a has bought three sheets of orange paper.

On the next day, the artist 1a makes a request for four sheets of red paper to the same merchant 2a. Again, the Web retailer 2a receives the request, mails out the four sheets of red paper to the artist 1a and keeps track of the fact that the artist 1a has bought four sheets of red paper.

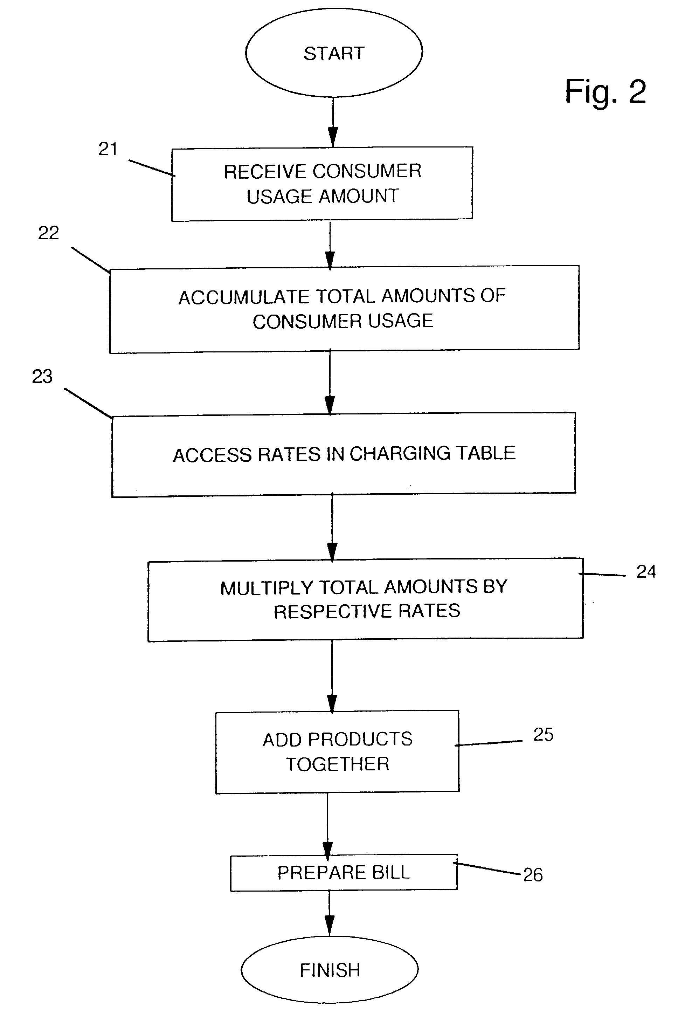

After a certain time period, e.g., 1 week, the merchant 2a collects the total number of red sheets of paper, orange sheets of paper, and any other colours of paper which artist 1a has ordered during the week, and sends this amount (using the "PROVIDE_CONSUMER_USAGE" function of the Billing Service) to the Billing Service 3. The Billing Service 3 thus receives this information, as illustrated at step 21 of the flowchart of Fig. 2.

This process repeats until another time period has elapsed, e.g., one month. At this time, the Billing Service accumulates (step 22) the total reported amounts of consumer usage by artist 1a of paper merchant 2a's goods. The Billing Service then accesses (step 23) a stored charging table (previously provided to the Billing Service 3 by the merchant 2a using the Billing Service's ESTABLISH_USAGE_CHARGES function) which indicates the amount of money that should be charged for each piece of orange paper and for each piece of red paper (and for any other colours of paper which the artist 1a has ordered during the one month time period).

The Billing Service would then multiply (step 24) the total number of orange sheets by the rate for orange sheets and the total number of red sheets by the rate for red sheets (and the same for any other colours ordered) and then add together (step 25) these results to obtain the total cost that the artist 1a owes the paper merchant 2a for this one month period.

The Billing Service would lastly prepare (26) a bill for sending to the artist 1a, such a bill indicating how much money the artist 1a owes the retailer 2a. The artist 1a later pays the Billing Service 3 the billed amount and the Billing Service in turn transfers the paid amount to the merchant 2a.

The Billing Service 3 can also keep track of one-time charges which take place between the merchant 2a and the artist 1a and integrate these one-time charges with the "usage" charges discussed above in the end-of-month bill that is sent to the artist 1a. For example, if the paper merchant 2a also sells a box for holding paper and the artist 1a orders such a box during a month in which the artist 1a also makes various orders for paper, the merchant 2a sends the Billing Service (using the function PROVIDE_ONE_TIME_CHARGE) the amount of money that the artist 1a should be charged for the box. This amount of money is then added to the total of the multiplied amounts discussed above in calculating the total bill.

According to the invention the Billing Service can send bills to a consumer containing charges from a number of suppliers, and these bills can include a mixture of costs derived either from a calculation of usage or an accumulation of one-time charges.

As a further advantage, the invention allows for multiple "usage-charged" services to be accumulated (from the same supplier or even from different suppliers). This greatly reduces the network traffic flow, especially between suppliers which otherwise would have to communicate with each other in order to perform a consolidation of a particular consumer's usage when it comes time for billing.

The Billing Service could also perform functions such as:
1. Notification of charging terms and conditions.
2. Debt collection.
3. Collection of penalty charges (through the PROVIDE_ONETIME_CHARGE function).
4. Consumer pre-payments. This would allow the consumer to identify which suppliers can erode an amount pre-paid to the Billing Service. This is the equivalent of the gift token (e.g. for a book or department store) or of the vending machine card.

## Claims

1. A centralized electronic billing apparatus to which at least one supplier and at least one consumer connects in a computer network, to thus enable electronic commerce to be carried out therebetween, the apparatus comprising:
means for accepting from an identified supplier usage charging terms concerning how prices are to be associated with amounts of consumption of a good or service by consumers;
means for accepting from said identified supplier a consumer usage amount indicating an amount of consumption of a good or service by an identified consumer; and
means for preparing a total price amount which said identified consumer owes said identified supplier by correlating said usage charging terms with said consumer usage amount, and for preparing a bill reflecting said total price amount.

2. The apparatus of claim 1 further comprising:
means for accepting from said identified supplier a one-time charge indicating an amount of money that should be charged to said identified consumer; and
means for consolidating said one-time charge with said total price amount to be reflected in said bill.

3. The apparatus of claim 1 wherein said charging terms include prices applicable for various categories of a particular good or service.

4. A method of performing centralized electronic billing where at least one supplier and at least one consumer connects in a computer network to a central billing apparatus, to thus enable electronic commerce to be carried out therebetween, the method, carried out by the billing apparatus, comprising steps of:
accepting from an identified supplier usage charging terms concerning how prices are to be associated with amounts of consumption of a good or service by consumers;
accepting from said identified supplier a consumer usage amount indicating an amount of consumption of a good or service by an identified consumer;
preparing a total price amount which said identified consumer owes said identified supplier by correlating said usage charging terms with said consumer usage amount; and
preparing a bill reflecting said total price amount.

5. The method of claim 4 further comprising the steps of:
accepting from said identified supplier a one-time charge indicating an amount of money that should be charged to said identified consumer; and
consolidating said one-time charge with said total price amount to be reflected in said bill.

6. The method of claim 4 wherein said charging terms include prices applicable for various categories of a particular good or service.

7. A method of instructing the carrying out of centralized electronic billing where at least one supplier and at least one consumer connects in a computer network to a central billing apparatus, to thus enable electronic commerce to be carried out therebetween, the method, carried out by a supplier, comprising steps of:
providing usage charging terms concerning how prices are to be associated with amounts of consumption of a good or service by consumers; and
providing a consumer usage amount indicating an amount of consumption of a good or service by an identified consumer;
so that the central billing apparatus can prepare a total price amount which said identified consumer owes said supplier by correlating said usage charging terms with said consumer usage amount.

8. A computer program product, stored on a computer-readable storage medium, for, when run on a computer, instructing the computer to carry out a method of performing centralized electronic billing where at least one supplier and at least one consumer connects in a computer network to a central billing apparatus, to thus enable electronic commerce to be carried out therebetween, the method, carried out by the billing apparatus, comprising steps of:
accepting from an identified supplier usage charging terms concerning how prices are to be associated with amounts of consumption of a good or service by consumers;
accepting from said identified supplier a consumer usage amount indicating an amount of consumption of a good or service by an identified consumer;
preparing a total price amount which said identified consumer owes said identified supplier by correlating said usage charging terms with said consumer usage amount; and
preparing a bill reflecting said total price amount.

9. The product of claim 8 further comprising the steps of:
accepting from said identified supplier a one-time charge indicating an amount of money that should be charged to said identified consumer; and
consolidating said one-time charge with said total price amount to be reflected in said bill.

10. The product of claim 8 wherein said charging terms include prices applicable for various categories of a particular good or service.
